# EUROPÄISCHE PATENTSCHRIFT

(11) **EP 1 000 342 B1**
(45) Veröffentlichungstag und Bekanntmachung des Hinweises auf die Patenterteilung: **02.10.2002**
(21) Anmeldenummer: 98938599.2
(22) Anmeldetag: 02.06.1998
(51) Int. Cl.: G01N 21/45

(54) **OPTISCHE DETEKTOREINRICHTUNG**
OPTICAL DETECTOR DEVICE
DETECTEUR OPTIQUE

(30) Priorität: 29.07.1997 DE 19732619
(43) Veröffentlichungstag der Anmeldung: 17.05.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: BRANDENBURG, Albrecht, D-79232 March (DE)
(74) Vertreter: Grünecker, Kinkeldey, Stockmair & Schwanhäusser Anwaltssozietät
(86) Internationale Anmeldenummer: EP9803281
(87) Internationale Veröffentlichungsnummer: WO99006819

(56) Entgegenhaltungen:
- EP-A- 0 283 047
- EP-A- 0 340 577
- EP-A- 0 481 440
- WO-A-97/12225
- GB-A- 2 228 082
- CHEN J ET AL: "QUANTITATIVE MEASUREMENT OF A PHASE OBJECT BY FRINGE SCANNING INTERFERENCE MICROSCOPY" APPLIED OPTICS, Bd. 28, Nr. 9, 1. Mai 1989, Seiten 1615-1617, XP000009914

## Beschreibung

Die Erfindung betrifft eine optische Detektoreinrichtung nach dem Oberbegriff des Anspruches 1, die auf der Bestimmung oder Beeinflussung der Phasengeschwindigkeit von Licht basiert.

Zum Nachweis von chemischen Reaktionen oder zur Analyse von Substanzen oder Stoffgemischen, sowie zur Bestimmung der Brechzahl eines Mediums bzw. der Brechzahldifferenz zweier Flüssigkeiten oder Gase besteht anwenderseitig ein Bedarf nach einem hochwertigen, gleichwohl störunanfälligen und aus wenigen Komponenten verhältnismäßig einfach aufgebautem Detektorsystem.

Zu diesem Zweck sind im Stand der Technik interferometrische oder differentialrefraktorische Meßzellen und Meßeinrichtungen bekannt (US 4229105, US 5168325, US 5426505).

Ein direkter Nachweis chemischer oder biochemischer Reaktionen, d.h. eine Detektion, die ohne die Verwendung von Markierungen, (wie z.B. durch Fluoreszenz oder Radioaktivität) auskommt, kann unter anderem dadurch erfolgen, daß die Ausbreitungsgeschwindigkeit einer Lichtwelle in Abhängigkeit von ihrer Beeinflussung durch die zu erfassende Substanz (Detektionsmedium) erfaßt wird. Aus der Veränderung der Ausbreitungsgeschwindigkeit wird dann auf das beeinflussende Medium (Detektionsmedium) rückgeschlossen. Die Veränderung der Ausbreitungsgeschwindigkeit der Lichtwellen kann durch verschiedene optische Anordnungen detektiert werden. Vielfach wird die Geschwindigkeitsmessung auf eine Winkelmessung zurückgeführt. Dabei werden sowohl frei im Raum sich ausbreitende Lichtstrahlen als auch in Wellenleitern geführtes Licht verwendet. Wie bekannt, ist die Führung des Lichtes in einem Lichtwellenleiter mit einem evaneszenten Feldanteil verbunden, der außerhalb des Lichtleiters geführt wird. Daher ist es mit optischen Lichtwellenleitern möglich, eine Detektion von Massenbelegungen auf der Oberfläche des Lichtwellenleiters (genauer auf der Oberfläche der lichtleitenden Schicht des Lichtwellenleiters) vorzunehmen.

In diesem Bereich hat sich das Interesse, insbesondere auf zwei Meßprinzipien, die Oberflächen-Plasmonenräsonanz (B. Liedberg, C. Nylander, I. Lundström: Surface plasmon resonance for gas detection and biosensing; Sensors and Actuators 4 (1983) 299) und das Prinzip des Gitterkopplers (Ph. Nellen, K. Tiefenthaler, W. Lukosz: Integrated optical input grating couplers as biochemical sensors; Sensors and Actuators 15 (1988) 285) konzentriert. In beiden Fällen wird die Ausbreitungskonstante einer geführten Lichtwelle aus einer Winkelmessung bestimmt. Dabei benutzt man die Tatsache, daß die Anregung des Oberflächenplasmons bzw. des Wellenleitermodus (im Falle des Gitterkopplers) bei Einstrahlung auf das Dünnfilm-Element nur in einem sehr kleinen Winkelbereich möglich ist. Dieser Winkelbereich verschiebt sich in Abhängigkeit von der Absorbtion von Molekülen auf der Oberfläche des Bauelementes. Die Empfindlichkeit der beiden Meßmethoden bezüglich der Oberflächenbelegung mit Antikörpern bzw. Antigenen ist etwa gleich. Sie ist allerdings dadurch begrenzt, daß das Zentrum des Winkelbereiches, in dem die Einkopplung möglich ist, mit einer Genauigkeit von ca. 1 × 10⁻³ dieses Winkelbereiches bestimmt werden kann.

Auch ein weiteres Verfahren, das sogenannte "resonant mirror"-Prinzip führt die Änderung der Ausbreitungsgeschwindigkeit auf eine Winkelmessung zurück (R. Cush, J. Cronin, W. Steward; C. Maule, J. Molloy; N. Goddard: The resonant mirror: a novel optical biosensor for direct sensing of biomolecular interactions, Part I: Principle of operation and associated instrumentation, Biosensors & Bioelectronics 8 (1993) 347).

Ferner werden in jüngerer Zeit zunehmend integriert-optische Bauelemente für interferometrische Zwecke verwendet, wie z.B. das Mach-Zehnder Interferometer oder das Young-Interferometer (z.B. als Schichtwellenleiter für die Erfassung von magnetischen Feldstärken, Spannungen oder Temperaturen, für die Refraktrometrie oder chemische Substanznachweise). Diese integrierten Optiken sind sehr kompakt und mechanisch stabil. Im Bereich der Technologie solcher planaren Lichtwellenleiter muß den Problemen der Faser- und Lichteinkopplung in dieser integrierten Optiken ebenso wie dem Erhalt eindeutiger Meßergebnisse wegen der periodischen Struktur von interferometrisch erhaltenen Intensitätsverteilungen besondere Aufmerksamkeit gewidmet werden.

Anwenderseitig wird die Verbesserung dieser bestehenden Systeme im Sinne einer hochauflösenden optischen Detektoreinrichtung gewünscht, die aus Kostengründen und zur Verbesserung der Störunanfälligkeit aus wenigen optischen Komponenten und einfach aufgebaut sein soll. Die Einrichtung soll außerdem eine Auslegung als Vielkanalsystem ermöglichen, so daß in einem Arbeitsgang eine Vielzahl von Analysen (vorweise mehr als 100 Analysen) parallel durchgeführt werden können. Analysenanordnungen, die chemische oder biochemische Reaktionen auf der Oberfläche eine Lichtwellenleiters auswerten, erfordern preisgünstige und leicht austauschbare Wellenleiter-Bauelemente, da die Immobilisierung spezifischer Substanzen zur Erkennung des Analyten (Detektionsmedium) nur begrenzt haltbar ist. Insbesondere ist in der Regel nur eine begrenzte Anzahl von Nachweisen mit einer Immobilisierung durchführbar.

Eine optische Detektoreinrichtung nach dem Oberbegriff des Anspruches 1 ist aus der WO-A-97 12 225 bekannt. Hierbei wird ein Interferenzrefraktometer in integriert-optischer Bauweise mit einem planaren Lichtwellenleiter gezeigt, dem monochromatisches Licht zugeführt wird.

Das Licht wird im Eingangsbereich in zwei Lichtbündel aufgeteilt, die sich entlang eines planaren Lichtwellenleiters ausbreiten. Eines der beiden Lichtbündel steht über eine evaneszente Welle mit einer zu vermessenden Substanz teilweise in Kontakt, so daß seine Ausbreitungsgeschwindigkeit und damit seine Phase beeinflußt wird. Die Überlagerung dieses Lichtbündels mit dem anderen (Referenz-)Lichtbündel führt zu einem Interferenzsignal, aus dem der Brechungsindex der zu vermessenden Substanz bestimmt wird.

Der Erfindung liegt daher die Aufgabe zugrunde, eine optische Detektoreinrichtung der eingangs genannten Art zu schaffen, die den oben genannten Anforderungen genügt und in unkomplizierter und kostengünstiger Weise eine gewünschte, stoffspezifische Detektion ermöglicht.

Diese Aufgabe wird erfindungsgemäß durch die Merkmale des Anspruches 1 gelöst.

Die erfindungsgemäß vorgesehene Strahlformung des von einer Lichtquelle aufgenommenen Lichtes zu zwei Strahlquellen, die divergentes Licht abstrahlen, gestattet bei Beaufschlagung des einen Strahlenbündels mit einem Referenzmedium (Referenzstrecke) und Beaufschlagung des anderen Strahlenbündels mit einem Detektionsmedium (Meßstrecke) eine einfache Überlagerung der divergenten Strahlenbündel in der Detektionsebene, in der sich ein ortsauflösender Detektor (vorzugsweise eine CCD-Zeile befindet), zur Erfassung der charakteristischen Intensitätsverteilung.

Das entstehende Linienmuster entspricht der Signatur, wie sie aus dem Doppelspaltversuch bekannt sind. Diese Signatur (Intensitätsverteilung) verändert sich, wenn sich in einer der Einwirkungsstrecken (Meßstrecke bzw. Referenzstrecke) die Phasengeschwindigkeit des Lichtes ändert. Die Analyse des Beugungsmusters, das durch den ortsauflösenden Detektor erfolgt, erlaubt die quantitative Bestimmung der Phasendifferenz am Ende von Meß- bzw. Referenzstrecke (Einwirkungsstrecken) und damit die Analyse einer bestimmten Substanz, von Stoffgemischen oder chemischen Reaktionen, sowie auch die Bestimmung von Brechzahlen zweier Flüssigkeiten oder Gase unter Durchstrahlung der vorzugsweise in einer Doppelkuvette befindlichen Medien durch die Strahlenbündel.

In einer besonders bevorzugten Ausführungsform kann zusätzlich unter Ausnutzung der Fluoreszenz des Detektionsmediums (oder des Referenzmediums) auch eine Analyse durch Fluoreszenzmessung erfolgen.

Bevorzugte Ausgestaltungen des Erfindungsgegenstandes sind in den Unteransprüchen dargelegt.

Die Erfindung wird nachstehend anhand von Ausführungsbeispielen und dazugehörigen Zeichnungen näher erläutert. In diesen zeigen:
- Fig. 1a-1c: schematische Darstellungen der strukturellen Auslegung von optischen Detektoreinrichtungen nach verschiedenen Ausführungsbeispielen der Erfindung,
- Fig. 2: eine optische Detektoreinrichtung in schematischer Darstellung nach einem weiteren Ausführungsbeispiel der Erfindung mit einer Strahlformungseinrichtung stromauf von Meß- bzw. Referenzstrecke (Einwirkungskanäle bzw. Einwirkungsstrecken),
- Fig. 3: eine optische Detektoreinrichtung in schematischer Darstellung nach einem weiteren Ausführungsbeispiel der Erfindung mit Meß- bzw. Referenzstrecke stromauf einer Strahlformung,
- Fig. 4: eine optische Detektoreinrichtung nach einem weiteren Ausführungsbeispiel der Erfindung mit Integration der Meß- bzw. Referenzstrecken und der Strahlformungseinrichtung in einem integriert-optischen Bauelement,
- Fig. 5: eine optische Detektoreinrichtung nach einem weiteren Ausführungsbeispiel der Erfindung in Mehrkanalauslegung, in schematische Darstellung, und
- Fig. 6: eine optische Detektoreinrichtung (partiell) in Kombination mit einer Fluoreszenzerfassung in schematischer Darstellung.

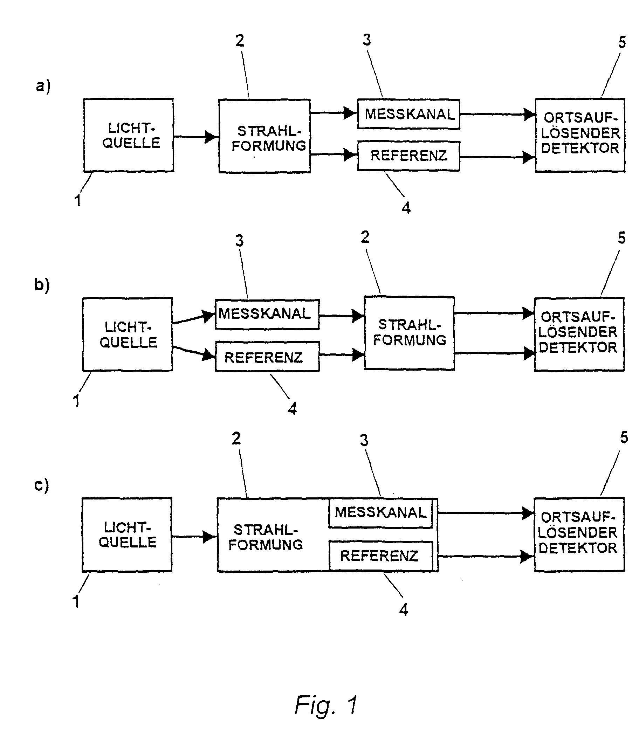

Zunächst wird auf die Figuren 1a bis 1c Bezug genommen, die in schematischer Blockdarstellung verschiedene Auslegungsmöglichkeiten der optischen Detektoreinrichtung zeigen.

In allen Fällen besteht die Detektoreinrichtung aus einer (einzigen) Lichtquelle 1, einer optischen Anordnung (Strahlformungsoptik 2) zur Erzeugung zweier divergent abstrahlender, räumlich begrenzter, möglicht punktförmiger Intensitätsverteilungen (Strahlquellen), einem aus einer Meßstrecke 3 und einer Referenzstrecke 4 bestehendem Einwirkungsbereich, in dem das Licht entlang der oder durch die zu analysierenden Substanzen geführt wird, sowie einer fotoelektrischen Empfangseinrichtung 5 (ortsauflösender Detektor).

In den Figuren 1a bis 1c ist eine solche optische Detektoreinrichtung schematisch dargestellt. Die Einwirkungsstrecke aus Meßstrecke 3 und Referenzstrecke 4 kann sich vor oder hinter dem optischen Teiler 2 (Strahlformungsoptik) befinden. Diese beiden Ausführungsformen sind in den Figuren 1a und 1b dargestellt.

Wie in Figur 1c gezeigt, kann der optische Teiler (Strahlformungsoptik 2) auch integral einstückig mit der Meßstrecke 3 (Meßkanal) bzw. der Referenzstrecke 4 (Referenzkanal), d.h. mit dem Einwirkungsbereich in einem integriert optischen Element (IO-Element), vorzugsweise einem planaren, lateral unstrukturierten Lichtwellenleiter (Schichtwellenleiter) ausgebildet sein, wie dies anhand weiterer Ausführungsbeispiele noch genauer erläutert wird.

Die beiden divergenten Strahlenbündel überlagern sich auf der sich an die Strahlformungsoptik 2 anschließenden Strecke. Sie erzeugen in einer Detektionsebene, in der sich die ortsauflösende, d.h. die eine Positionsinterpretation der Intensitätsverteilung gestattende optoelektronische Empfangseinrichtung, vorzugsweise eine CCD-Zeile 5, befindet, eine für die untersuchte Probe charakteristische Intensitätsverteilung. Das entstehende Linienmuster enspricht der Signatur, die bei dem bekannten Doppelspalteversuch entsteht. Dieses Muster verändert sich, wenn sich in einer der Einwirkungstrecken, d.h. entweder in der Meßstrecke 3 oder in der Referenzstrecke 4 die Phasengeschwindigkeit des Lichtes ändert. Die Analyse des Beugungsmusters erlaubt die quantitative Bestimmung der Phasendifferenz am Ende von Meßstrecke 3 und Referenzstrecke 4.

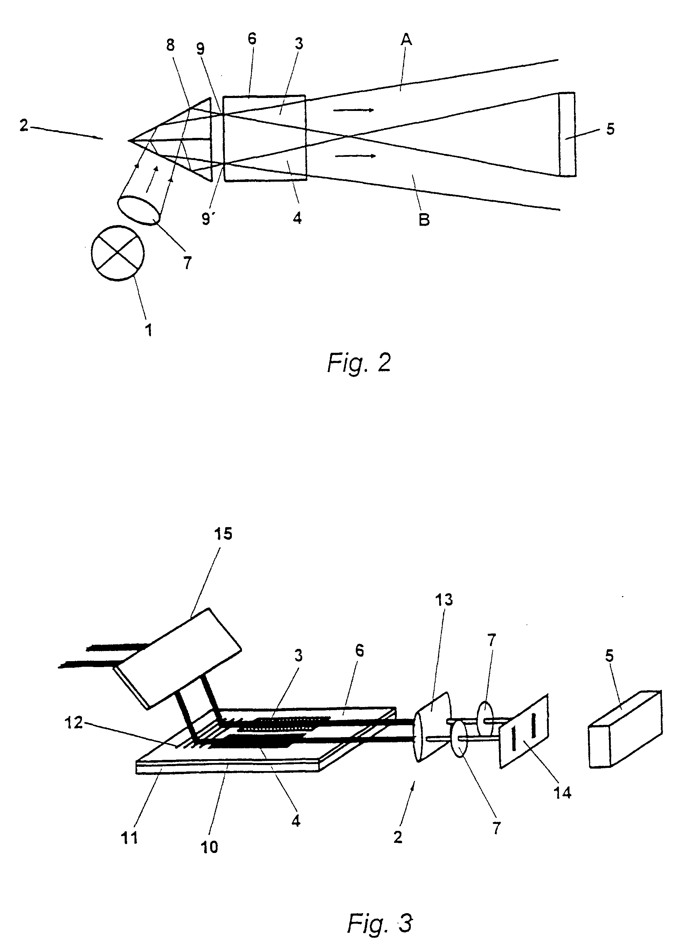

Eine Ausführungsform des Ausführungsbeispiels nach Fig. 1a ist in Fig. 2 dargestellt. Hierbei ist die Strahlformungsoptik 2 im Lichtpfad zwischen der Lichtquelle 1 und einem planaren Lichtwellenleiter 6, in dem (hier nicht näher dargestellt) die Meßstrecke 3 und die Referenzstrecke 4 gebildet sind, angeordnet. Die Strahlformungsoptik 2 besteht aus einer fokussierenden Linse 7 und einem Kösters-Prisma 8. In der Brennebene der fokussierenden Linse 7 entstehen zwei helle Lichtflecke, die divergent in den dahinterliegenden Raum einstrahlen. Ist hier ein planarer Lichtwellenleiter 6 angeordnet, der ohne laterale Strukturierung seiner vorzugsweise an der Oberfläche befindlichen lichtleitenden Schicht festliegt in einer Ebene hält, verlaufen die Strahlenbündel in der Ebene der lichtleitenden Beschichtung weiterhin divergent, während das Licht in einer Ebene senkrecht zu der lichtleitenden Schicht auf die lichtleitende Schicht konzentriert wird. Entscheidend für die Erzeugung des Beugungsmusters an dem fotoelektrischen Detektor 5 ist die divergente Ausbreitung des ersten und zweiten Lichtbündels in der Schichtebene des planaren Lichtwellenleiters 6.

In dem Ausführungsbeispiel nach Fig. 2 ist eine Einkopplung des Lichtes von dem Kösters-Prisma 8 in den planaren Lichtwellenleiter 6 bzw. in die lichtleitende Schicht desselben durch eine Endfläche des planaren Lichtwellenleiters 6 vorgesehen. In dieser Endfläche entstehen Strahlquellen 9, 9' als Ausgangsquellen der beiden Lichtbündel des in der lichtleitenden Schicht des planaren Lichtwellenleiters geführten Lichtes und bilden die Meßstrecke 3 und die Referenzstrecke 4. In den jeweiligen Bereichen auf der Oberfläche des planaren Lichtwellenleiters 6, (die mit der lichtleitenden Schicht bedeckt ist), werden z.B. - hier nicht gezeigte - Durchflußzellen aufgesetzt, mit denen im Bereich der Meßstrecke 3 die Analyten (Detektionsmedium) und über die Referenzstrecke 4 Referenzflüssigkeiten zugeführt und dem evaneszenten Feld des in der lichtleitenden Schicht des planaren Lichtwellenleiters 6 geführten Lichtes ausgesetzt werden. Beim Durchlaufen des planaren Lichtwellenleiters 6 wird die Ausbreitungsgeschwindigkeit des Wellenleiter-Modus aufgrund des evaneszenten Feldanteiles, z.B. durch die auf der lichtleitenden Schicht ablaufenden chemischen Reaktionen, beeinflußt. Nachdem sie die lichtleitende Schicht des Lichtwellenleiters 6 durchlaufen haben, treten die Lichtbündel durch eine Endfläche des planaren Lichtwellenleiters 6 aus. Dabei wird die Ausbreitungsrichtung in der Ebene des lichtleitenden Filmes nur durch die Brechung des Lichtes verändert. Die Lichtbündel A, B sind weiterhin divergent, so daß sie nach einer bestimmten Strecke überlagern und man in einer Detektionsebene, in der eine CCD-Zeile 5 angeordnet ist, das Beugungsmuster erhält. In der Ebene senkrecht zum planaren Lichtwellenleiter 6 kann das Licht kollimiert werden oder durch Fokussierung mit einer Zylinderlinse eine linienförmige Intensitätsverteilung in der Detektionsebene erzeugt werden.

In einer alternativen Ausführungsform kann bei Austausch des planaren Lichtwellenleiters 6 gegen eine Doppelkuvette auch eine Brechzahldifferenz zweier Flüssigkeiten oder Gase mit der im übrigen wie vorbeschrieben ausgeschalteten Detektoreinrichtung gemessen werden.

Ein weiteres Ausführungsbeispiel einer optischen Detektoreinrichtung ist schematisch in Fig. 3 gezeigt. Bei diesem Ausführungsbeispiel ist die Einwirkungsstrecke, d.h. die Meßstrecke 3 und die Referenzstrecke 4, stromauf, d.h. vor der Strahlformungsoptik 2, angeordnet. Die Meßstrecke 3 bzw. die Referenzstrecke 4 ist auch in diesem Fall in einem integriert-optischen Element (IO-Element), d.h. in einem Schichtwellenleiter oder planaren Lichtwellenleiter 6, ausgebildet, der an seiner Oberfläche die lichtleitende Schicht 10 auf einem Substrat 11 trägt. Zur Ein- und Auskopplung des Lichtes in den bzw. aus dem Lichtwellenleiter 6 werden hier Beugungsgitter 12 eingesetzt. Nach Durchlaufen des wiederum lateral unstrukturierten Lichtwellenleiters 6 werden die Strahlenbündel durch eine Zylinderlinse 13 kollimiert. Mit zwei sphärischen Linsen 7 werden zwei Brennpunkte erzeugt. In der Brennebene der sphärischen Linsen 7 befindet sich eine doppelte Lochblende 14. Nach Durchlaufen der doppelten Lochblende 14 überlagern sich die divergent verlaufen Strahlenbündel (hier nicht gezeigt), so daß in der CCD-Zeile 5 dieselbe Signatur entsteht wie in dem Ausführungsbeispiel nach Fig. 2. Zur Einkopplung der Strahlenbündel in das Koppelgitter wird hier ein Umlenkspiegel 15 verwendet.

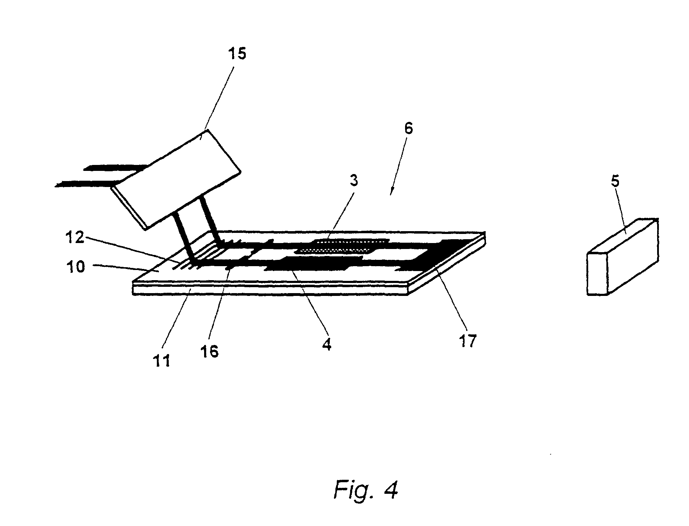

Ein Ausführungsbeispiel für die in einem Bauteil zusammengefaßte, integrale Ausbildung von Einwirkungsbereich, d.h. von Meßstrecke 3 und Referenzstrecke 4 mit der Strahlformungsoptik in einem wiederum als Schichtwellenleiter (planarer Lichtwellenleiter 6) ausgebildeten integriert-optischen Element zeigt schematisch Fig. 4. Paralleles Licht eines Lichtstrahles wird über einen Umlenkspiegel 15 durch ein Koppelgitter 12 in den planaren Lichtwellenleiter 6 eingekoppelt Der planare Lichtwellenleiter 6 besteht wiederum aus einem Basissubstrat 11 das mit der lichtleitenden Schicht 10 überzogen ist. In der lichtleitenden Schicht 10 des Lichtwellenleiters 6 sind planare Linsen 16 gebildet, die in der Ebene der lichtleitenden Schicht 10 des Lichtwellenleiters 6 eine Lichtbündelung bewirken. Diese fokussierenden Linsen 16 werden durch eine Anhebung der effektiven Brechzahl des Wellenleiter-Modus erzeugt. Dies kann z.B. durch Erhöhung der Dicke der lichtleitenden Schicht 10 im Bereich der fokussierenden Linsen 16 hervorgerufen werden. Diese planaren Linsen 16 fokussieren das geführte Licht unter Durchlaufen von Meßstrecke 3 bzw. Referenzstrecke 4 auf planare Spalte zur Bildung eines Strahlquellenpaares, von dem aus das Licht in divergenten Lichtbündeln aus der Endfläche des Lichtwellenleiters 6 zur Überlagerung in der Detektionsebene der CCD-Zeile 5 abgestrahlt wird. Ein solcher Spalt kann z.B. dadurch erzeugt werden, daß in dem Bereich um die schmale Austrittsöffnung des Lichtes aus der lichtleitenden Schicht 10 des Lichtwellenleiters 6 herum diesem eine das Licht stark absorbierende Eingeschaft verliehen wird oder dadurch, daß das Licht in diesem Bereich in anderer Weise abgestrahlt wird.

Die Erhöhung der Lichtabsorbtionsfähigkeit zur Bildung der punktförmigen Strahlquellen, von der aus sich das Licht als divergentes Lichtbündel ausbreitet, kann z.B. durch metallische Beschichtungen 17 des Wellenleiters 6 realisiert werden.

Der andere Fall, d.h. das Bilden einer punktförmigen Strahlquelle kann durch eine definierte Unterbrechung des Lichtwellenleiters erreicht werden. Zum Beispiel kann der ganzflächig hergestellte Lichtwellenleiter durch strukturiertes Ätzen seiner Oberfläche in seiner lichtleitenden Schicht dort unterbrochen werden, wo das Licht nicht weitergeführt werden divergent abgestrahlt werden soll.

Ein derartiges planares Analagon zu der Ausbildung einer Doppelspaltblende würde auch ohne die planaren Linsen arbeiten. Die Fokussierung der Linsen auf die planaren Spalte erhöht insgesamt die transmittierte Lichtintensität deutlich. Bei Verwendung der Linsen filtert der Spalt bei einem solchen, hier nicht gezeigten, Ausführungsbeispiel unerwünschtes Streulicht aus der anschließend in der Detektionsebene aufgenommenen Intensitätsverteilung. Es versteht sich von selbst, daß auch bei diesem Ausführungsbeispiel die Anordnung des Analyten bzw. der Referenzflüssigkeit, z.B. mit Hilfe von Durchflußzellen, in Kontakt mit der lichtleitenden Schicht (Oberfläche) des planaren Lichtwellenleiters 6 nur schematisch und nicht im einzelnen gezeigt ist

Als lichtleitendes Schichtelement kann auch ein integriert-optischer Y-Verteiler als Element, durch das in einem Bauteil die Einwirkungsstrecke (Referenzstrecke, Meßstrecke) mit der Strahlformungsoptik zur Bildung der Strahlquellen, die die divergenten Strahlbündel abstrahien, kombinierbar ist, verwendet werden. Der Y-Verteiler ist im Gegensatz zu den vorerläuterten Lichtwellenteitern dabei aus Streifenleitern aufgebaut. Das heißt, der Y-Verteiler weist hinsichtlich seiner lichtleitenden Schicht eine laterale Strukturierung auf, so daß bestimmte Lichtpfade durch diese Strukturierung der Lichtwellenleiter vorgegeben werden. Für Monomode-Wellenleiter liegen typische Strukturbreiten in der Größenordnung von wenigen Mikrometern. Der Y-Verteiler teilt das in einen Eingang eingekoppelte Licht auf zwei Ausgänge auf, die die Strahlquellen bilden. Durch die Beugung des Lichtes beim Austritt aus dem Wellenleiter entstehen divergente Strahlbündel, die nach einer bestimmten Strecke auch ein Linienmuster erzeugen. Die Einwirkung durch die zu detektierenden Substanzen bzw. chemischen Reaktionen erfolgt wiederum durch das evaneszente Feld des Streifenleiters. Ein Zweig dieser als Y-Verteiler ausgebildeten, planaren optischen Struktur, bildet die Meßstrecke, während der andere Zweig die Referenzstrecke bildet. Die Länge der Einwirkungsstrecke kann sehr präzise durch strukturierte Deckschichten definiert werden. Auch in einem solchenFall werden vorzugsweise zwei verschiedene Durchflußzellen auf die Pfade des Y-Verteilers aufgesetzt, die einerseits den Analyten (Detektionsmedium) und andererseits Referenzflüssigkeiten führen.

Alternativ ist auch in diesem Fall die Messung von Brechzahlen an Flüssigkeiten oder Gasen möglich, in em die Oberfläche des Y-Verteilers unbeeinflußt bleibt aber im Anschluß an den Y-Verteiler eine Doppelkuvette angeordnet wird, durch die die aus den beiden Pfaden von den Strahlquellen Y-Verteilers austretende Lichtstrahlung divergent hindurchtritt.

Sowohl in diesem wie auch in den vorerläuterten Ausführungsbeispielen kann auch die Brechzahl von Flüssigkeiten dadurch bestimmt werden, daß aufgrund des evaneszenten Feldes die Phasengeschwindigkeit der geführten Lichtwelle auch von einer Brechzahl des über der lichtleitenden Schicht des Wellenleiters befindlichen Mediums abhängt.

In einer Detektionsebene entsteht ein hier nur schematisch angedeutetes Linienmuster. Die Intensitätsverteilung läßt sich bei Verwendung kohärenten Lichtes, abgesehen von einem Intensitätsabfall am Rand der Signatur, durch eine cos²-Funktion beschreiben. Bei einer Veränderung der Phasengeschwindigkeit des Lichtes im Bereich von Meßstrecke bzw. Referenzstrecke bewegt sich die Signatur lateral. Durch verschiedene numerische Verfahren kann die Phase dieser periodischen Verteilung sehr genau bestimmt werden.

Vorzugsweise wird die aufgenommene Signatur mit Hilfe einer Fourier-Transformation ausgewertet.

Bei einer Lateralverschiebung um eine Periode der Signatur oder einem Vielfachen davon, bereitet zunächst die Eindeutigkeit der Auswertung Schwierigkeiten, da bei Verschiebung um genau eine Periode wieder eine identische Intensitätsverteilung entsteht. Diese Schwierigkeit kann durch den Einsatz mehrerer, zumindest zweier diskreter Lichtwellenlängen umgangen werden. Es ist also vorteilhaft, gleichzeitig mit Licht unterschiedlicher Wellenlänge in Meßstrecke und Referenzstrecke zu arbeiten. Die dann entstehende Verteilung ist durch ein cos²-Funktion mit einer periodischen Einhüllenden beschrieben. Die Periode der Hüllkurve hängt von der Differenz der verwendeten Lichtwellenlängen ab. Die Verschiebung der Hüllkurve entspricht derjenigen der ursprünglichen Signatur kleinerer Periode. Der Eindeutigkeitsbereich der Erfassung kann daher deutlich vergrößert werden.

Alternativ hierzu kann anstelle kohärenten Lichtes auch Licht geringer Kohärenz in Meßstrecke und Referenzstrecke verwendet werden. In diesem Fall wird die cos²-Funktion von einer nicht-periodischen Einhüllenden überlagert und die Position einer Signatur durch Faltung mit einer Funktion bestimmt, die aus einem periodischen Anteil und einer nicht-periodischen Einhüllenden besteht. Die Auswertung ist dann eindeutig möglich.

Bei Verwendung von Licht geringer Kohärenz erfolgt die Auswertung der Intensitätsverteilungen in der Detektionsebene vorzugsweise in zwei Schritten. Zunächst wird eine Grobsuche durchgeführt, mit der das Maximum der Einhüllenden der Intensitätsverteilung bestimmt wird. Dieser Algorithmus muß mindestens mit einer Genauigkeit erfolgen, die der Periode des Beugungsmusters entspricht, so daß die Interferenzordnung eindeutig gegeben ist. In einem zweiten Schritt wird mit hoher Auflösung die Phasenlage der periodischen Intensitätsverteilung ermittelt.

Vorzugsweise wird diese Grobsuche aus einer Korrelation des mit der CCD-Zeile aufgenommenen Signals mit zwei Referenzverteilungen durchgeführt. Es handelt sich bei diesen Referenzverteilungen um numerisch berechnete Sinus- und Kosinus-Funktionen mit einer kosinusförmigen Einhüllenden. Diese modifizierte Kreuzkorrelation ergibt ein Maximum an der Position des Maximums der Einhüllenden der Intensitätsverteilung (Interferometersignal).

Ausgehend von dieser Position wird ein Zentrum der Intensitätsverteilung genau bestimmt, indem eine Fourier-Transformation der Signalverteilung vorgenommen wird.

Wahlweise kann auch eine FFT-Analyse (Fast Fourier Transformation) des Interferometersignales, d.h. der Signatur oder Intensitätsverteilung durchgeführt werden. Zur genauen Positionsbestimmung werden nur diejenigen Fourier-Koeffizienten ausgewertet, die der Ortsfrequenz zugeordnet sind, bei der das Leistungsspektrum sein Maximum hat. Da die Fourier-Koeffizienten bei anderen Ortsfrequenzen keine Information enthalten, ist es ausreichend, nur diese eine Ortsfrequenz zu betrachten.

Alternativ zu dem FFT-Algorithmus werden unter Verwendung numerisch errechneter Sinus- und Kosinus-Funktionen die Fourier-Koeffizienten nur bei der Ortsfrequenz des Signales errechnet. Die Phase wird durch Berechnung des Arcustangens des Verhältnisses der Fourier-Koeffizienten bestimmt.

Im Rahmen der Realisierung derartiger Detektoreinrichtungen kann somit kohärentes Licht, vorzugsweise aber auch Licht geringer Kohärenzlänge oder Licht mit mehreren Wellenlängen, gleichzeitig verwendet werden.

Neben der optischen Detektoreinrichtung, wie sie anhand von Ausführungsbeispielen erläutert und in den vorliegenden Ansprüchen näher umrissen ist, ist auch das vorerläuterte Meß- und Auswerteverfahren erfindungswesentlich.

Auf dem Gebiet der Analytik ist die parallele Detektion vieler Substanzen ein wesentliches Ziel gegenwärtiger und zukünftiger Entwicklungen. Gegenwärtig werden in Analyseautomaten in der Regel sogenannte Mikrotiterplatten verwendet, die auf ihrer Oberfläche 8 x 12 Vertiefungen (wells) aufweisen. Die Platten sind üblicherweise 8,6 x 12,8 cm groß. Der Entwicklungstrend geht zu kleineren Analytmengen (kleinere Mengen an Detektionsmedium) und eine größere Anzahl von Meßstellen.

Nach einem weiteren Ausführungsbeispiel können auch auf Grundlage der vorliegenden Detektoreinrichtung bzw. des Meßverfahrens Analysen in einem derartigen Mikrotiterplattenformat oder ähnlicher Anordnungen vieler miniaturisierter Behälter für Reagenzien erfolgen.

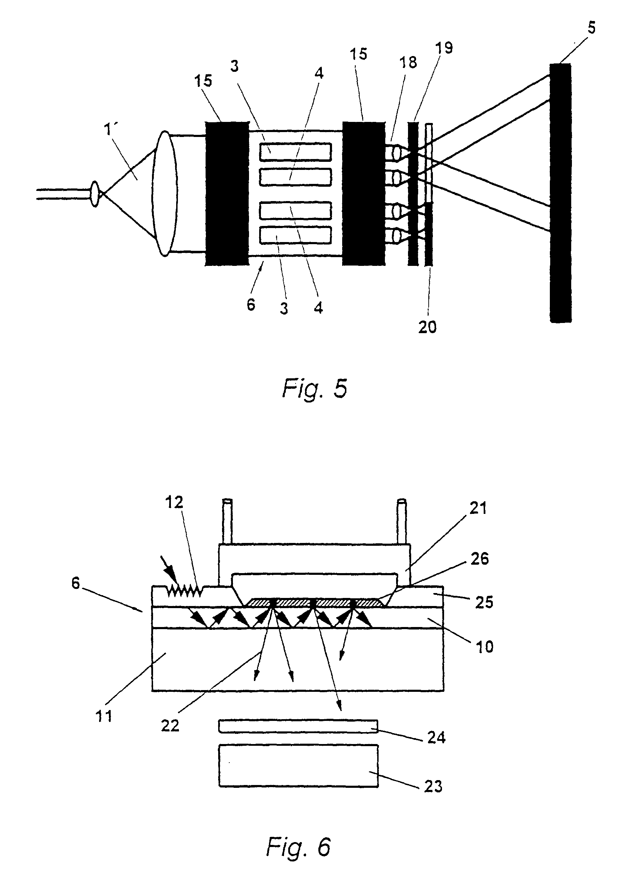

Eine solche Ausführungsform zeigt Fig. 5, die eine Weiterbildung in Richtung Mehrkanal-Analyse zum Ausführungsbeispiel nach Fig. 3 ist. Ähnlich dem Young-Interferometer wird ein Laserstrahl, hier ein aufgeweiterter Laserstrahl 1', über einen Umlenkspiegel 15 und ein (hier nicht dargestelltes) Koppelgitter in das integriert-optische Bauelement, den planaren Lichtwellenleiter 6, eingekoppelt, so daß der an seiner Oberfläche mit der lichtleitenden Schicht versehene Lichtwellenleiter 6 in seiner ganzen Breite ausgeleuchtet ist. Durch fotolitografische Bearbeitung sind auf der Oberfläche des Lichtwellenleiters 6 eine Vielzahl von Meßfenstern definiert. Im vorliegenden Fall sind vier Meßfenster, d.h. jeweils ein aus einer Meßstrecke 3 und einer Referenzstrecke 4 bestehendes Paar, vorgesehen, die praktisch zwei Interferometer darstellen. Nach einer Auskopplung des Lichtes und Führung über einen weiteren Umlenkspiegel 15 wird eine Fokussierung auf Schlitzblenden 18 mit einem Linsen-array 19 durchgeführt, das vorzugsweise mit mikrooptischen Linsensystemen (z.B. Kugellinsen) oder mit GRIN-Linsen realisiert werden kann. Falls nur eine CCD-Zeile 5 verwendet wird, ist es erforderlich, die einzelnen Interferometer, gebildet jeweils durch eine Meßstrecke 3 und eine Referenzstrecke 4 zeitlich abwechselnd auszulesen. Hierzu ist vorzugsweise ein elektrisch ansteuerbares Flüssigkeitskristallfeld 20 vorgesehen, das den Ausgang eines Interferometers auf die CCD-Zeile 5 durchläßt, die Ausgänge der anderen (hier des zweiten) Interferometers aber sperrt. Auf diese Weise erscheint jeweils nur die Signatur eines Interferometers auf die CCD-Zeile 5. Aufgrund der relativ langsam ablaufenden Immunreaktionen bei der Untersuchung biochemischer Reaktionen sind die Geschwindigkeitsanforderungen an ein Multiplexing sehr gering. Auch in diesem Fall ist die Anordnung des auf die Schlitzblenden fokussierenden Linsen-arrays fakultativ, im Interesse der Signalintensität jedoch vorteilhaft.

Alternativ zu der Ausführungsform nach Fig. 5 kann auch an jeder Meßstelle, d.h. an jeder Referenzstrecke und jeder Meßstrecke, ein eigenes Paar Koppelgitter für die Ein- und Auskopplung des Lichtes vorgesehen sein. Das Auslesen kann jeweils gleichzeitig für jede Reihe von Vertiefungen, in denen sich die Detektionsmedien bzw. Referenzmedien befinden, erfolgen. Eine nächste Reihe von Proben kann durch mechanisches Verschieben der Trägerplatte (in der Art von Mikrotiterplatten) oder der Lichtführung in Bezug auf die gebildeten Referenz- und Meßstrecken erfolgen.

Auf diese Weise kann auch eine Vervielfachung eines integriert-optischen Y-Teilers zu einem Mehrkanal-Detektor erfolgen, in dem mehrere Y-Verteiler in einer Reihenanordnung eingesetzt werden, derart, daß die beiden Strahlquellen am Ausgang eines Y-Verteilers die Eingangs-Lichtquelle für zwei nachgeordnete Y-Verteiler bilden.

Ein weiteres Ausführungsbeispiel ist (für einen Kanal, d.h. für Meß- oder Referenzstrekke) in Fig.6 dargestellt. Die Besonderheit dieses Ausführungsbeispieles besteht darin, daß hier die optische Detektion eines durch eine Küvette 21 geführten, z.B. in Pfeilrichtung durch die Küvette 21 zirkulierenden Mediums zugleich eine Fluoreszenzstrahlung 22 dieses Mediums erfaßt und vorzugsweise durch das transparente oder transluzente Substrat 11 hindurch durch einen Fotoverstärker 23, vorzugsweise mit vorgeschaltetem Filter 24, erfaßt wird.

In diesem Fall kann also eine zusätzliche Information über das zu detektierende Medium (zusätzlich zur optischen Auswertung durch Überlagerung der konvergenten Lichtbündel von Meßstrecke und Referenzstrecke) entsprechende Fluoreszenzstrahlungsmessungen verglichen bzw. erfaßt werden und hieraus ein weiteres Unterscheidungskriterium für, z.B. den Analyten, zur Verfügung steht.

Auch bei diesem Ausführungsbeispiel (das nur die Meßstrecke in dem planaren Lichtleiter 6 schematisch im Schnitt zeigt, ist ebenfalls ein aus (transparentem oder transluzentem) Substrat 11 und lichtleitender Schicht 10 bestehender planarer Lichtwellenleiter 6 verwendet, dessen Wellenleiter (lichtleitende Schicht 10) durch eine Deckschicht 25 abgedeckt ist, unter Freilassen eines Bereiches, in den die Küvette 21 mit dem Analyten 26 in Anlagekontakt an die lichtleitende Schicht 10 gebracht ist.

Das Licht wird über ein Koppelgitter 12 eingekoppelt und in der lichtleitenden Schicht reflektiert, so daß es nach Durchlaufen der lichtleitenden Schicht 10, z.B. wie in dem Ausführungsbeispiel nach Fig.3 oder 4, weiterverarbeitet werden kann.

Zugleich löst das Licht jedoch auch im Analyten 26 eine Fluoreszenzstrahlung 22 aus, die durch das Substrat 11 hindurch an der Unterseite des Lichtwellenleiters 6 fotoelektrisch erfaßt wird.

Dem Analyten 26 kann eine solche Fluoreszenzeigenschaft entweder von Hause aus innewohnen oder sie kann ihm durch entsprechendes Markieren mit fluoreszierendem Material verliehen werden. Gegebenenfalls können auch andere Strahlungsemissionen als Zusatzinformation erfaßt werden, wie z.B. radioaktive Strahlung, nachdem der Analyt mit entsprechenden Substanzen geimpft worden ist. Vorzugsweise werden jedoch lichtabhängige Strahlungseigenschaften des Analyten, insbesondere die Fluoreszenz, zur Gewinnung einer Zusatzinformation verwendet. Die Detektion dieser Fluoreszenzstrahlung kann auch in anderer Weise, d.h. auch an anderen Stellen bezüglich des Lichtwellenleiters 6 erfolgen.

Durch die Erfindung wird eine für viele Analysezwecke verwendbare, robust gestaltete und in ihrem Aufbau einfache optische Detektoreinrichtung geschaffen, die auch rasch austauschbar ist, so daß den Erfordernissen der Praxis nach Bereitstellung eines Nachweiselementes für chemische oder biochemische Reaktionen auf optischer Basis in besonders vorteilhafter Weise Rechnung getragen ist.

## Patentansprüche

1. Optische Detektoreinrichtung, insbesondere zur Analyse von Substanzen, Stoffgemischen oder chemischen Reaktionen sowie zur Bestimmung von Brechzahlen, mit einer Lichtquelle, zumindest einer Meß- und zumindest einer Referenzstrecke und zumindest einer optoelektronischen Erfassungseinrichtung, mit zumindest einem der Lichtquelle nachgeordneten optischen Teiler zur Bildung von zwei Strahlquellen für die Ausbildung von jeweils einem Lichtbündel, wobei einem Lichtbündel eine Meßstrecke und einem Lichtbündel eine Referenzstrecke zugeordnet sind und zumindest in der Meßstrecke eine Phasengeschwindigkeit des Lichtes durch ein zu detektierendes Medium beeinflußbar ist, wobei die Meß- und Referenzstrecke (3;4) in einem planaren Schichtwellenleiter oder einem planaren, hinsichtlich seiner lichtleitenden Schicht lateral strukturierten Lichtwellenleiter ausgebildet sind, und die Lichtbündel zu einer Intensitätsverteilung überlagert sind, **dadurch gekennzeichnet, dass** in einer Detektionsebene, in der sich ein ortsauflösender Detektor befindet, die Lichtbündel zur Erfassung einer charakteristischen, linienförmigen Intensitätsverteilung überlagert sind und die Einrichtung so ausgestaltet ist, daß jedes Lichtbündel divergent auf den Detektor abgestrahlt wird.

2. Optische Detektoreinrichtung nach Anspruch 1, **dadurch gekennzeichnet, daß** die beiden Strahlquellen (9, 9') kohärentes oder Licht geringer Kohärenzlänge abstrahlen.

3. Optische Detektoreinrichtung nach zumindest einem der vorhergehenden Ansprüche 1 oder 2, **dadurch gekennzeichnet, daß** in Meß- und Referenzstrecke Licht unterschiedlicher Wellenlängen gleichzeitig verwendet und die Intensitätsverteilung durch eine cos²-Funktion mit periodischer oder einer dieser überlagerten, nicht periodischen Einhüllenden beschreibbar ist.

4. Optische Detektoreinrichtung nach Anspruch 3, **dadurch gekennzeichnet, daß** sich ein Detektions- bzw. Referenzmedium zugeordnet der Meß- bzw. Referenzstrecke in einer Durchflußzelle oder einer Kuvette (21) befindet, so daß in der Meß - und Referenzstrecke die Phasengeschwindigkeit des Lichtes durch das Detektions- bzw. Referenzmedium beeinflußt wird.

5. Optische Detektoreinrichtung nach Anspruch 4, **dadurch gekennzeichnet, daß** zumindest das Detektionsmedium (26) Fluoreszenzeigenschaften aufweist und die bei Bestrahlung mit dem in der Meßstrecke geführten Lichtstrahlenbündel von dem Detektionsmedium abgestrahlte Fluoreszenzstrahlung (22) einer Empfangseinrichtung (23) zugeführt ist.

6. Optische Detektoreinrichtung nach Anspruch 5, **dadurch gekennzeichnet, daß** die Empfangseinrichtung einen Photodetektor (23), vorzugsweise mit vorgeschaltetem Filter (24), enthält.

7. Optische Detektoreinrichtung nach Anspruch 5 oder 6, **dadurch gekennzeichnet, daß** das der Meßstrecke (3) zugeordnete Lichtbündel in einen, vorzugsweise partiell mit einer Deckschicht (25) versehenen, planaren Lichtwellenleiter (6) eingekoppelt ist und in einem freigelegten Bereich der lichtleitenden Schicht (10) des Lichtwellenleiters (6) mit dieser eine Kuvette (21) mit dem Detektionsmedium (26) in Kontakt ist.

8. Optische Detektoreinrichtung nach Anspruch 7, **dadurch gekennzeichnet, daß** die von dem Detektionsmedium (26 ) abgestrahlte Fluoreszenzstrahlung (22 ) durch ein transparentes Substrat (11) des Lichtwellenleiters (6) hindurch von der Im Bereich einer Rückseite des planaren Wellenleiters angeordneten Empfangseinrichtung (23) erfaßbar ist.

9. Optische Detektoreinrichtung nach zumindest einem der vorhergehenden Ansprüche 1 bis 8, **dadurch gekennzeichnet, daß** der optische Teiler stromauf der Meß- und Referenzstrecke (3, 4) angeordnet ist.

10. Optische Detektoreinrichtung nach zumindest einem der vorhergehenden Ansprüche 1 bis 8, **dadurch gekennzeichnet, daß** der optische Teiler stromab der Meß- und Referenzstrecke (3, 4) angeordnet ist.

11. Optische Detektoreinrichtung nach zumindest einem der vorhergehenden Ansprüche 1 bis 10, **dadurch gekennzeichnet, daß** der optische Teiler und die Meß- und Referenzstrecke (3, 4) in dem planaren Lichtwellenleiter (6) integriert sind.

12. Optische Detektoreinrichtung nach zumindest einem der vorhergehenden Ansprüche 1 bis 10, **dadurch gekennzeichnet, daß** der optische Teiler eine Strahlformungsoptik (2) mit einer fokussierenden Linse und einem Kösters-Prisma (8) ist.

13. Optische Detektoreinrichtung nach Anspruch 12, **dadurch gekennzeichnet, daß** dem Kösters-Prisma (8) der planare Lichtwellenleiter (6) nachgeordnet ist, der die beiden divergierenden Lichtbündel in der Ebene der lichtleitenden Schicht (10) des planaren Lichtwellenleiters (6) divergent führt.

14. Optische Detektoreinrichtung nach Anspruch 13, **dadurch gekennzeichnet, daß** stromab des Lichtwellenleiters (6) die Lichtbündel in einer Ebene senkrecht zum Lichtwellenleiter (6) zur Erzeugung einer linienförmigen Intensitätsverteilung kollimiert oder mit einer Zylinderlinse fokussiert sind.

15. Optische Detektoreinrichtung nach zumindest einem der vorhergehenden Ansprüche 1 bis 14, **dadurch gekennzeichnet, daß** der Lichtwellenleiter (6) lateral unstrukturiert ist und in diesem in Meß- und Referenzstrecke (3,4) parallele Lichtstrahlen, insbesondere über Koppelgitter (12), ein- und/oder auskoppelbar sind und stromab des Lichtwellenleiters eine Zylinderlinsenanordnung (13), gefolgt von einem Paar sphärischer Linsen (7) angeordnet ist, in deren Brennebene eine doppelte Lochblende (14) als optischer Teiler angeordnet und die von dieser ausgehenden, divergenten Lichtbündel von einer photoelektrischen Erfassungseinrichtung, insbesondere einer CCD-Zeile (5) aufgenommen sind.

16. Optische Detektoreinrichtung nach zumindest einem der vorhergehenden Ansprüche 1 bis 14, **dadurch gekennzeichnet, daß** der Lichtwellenleiter (6) lateral unstrukturiert ist und in diesem in Meß- und Referenzstrecke (3,4) parallele Lichtstrahlen, insbesondere über Koppelgitter (12), ein- und/oder auskoppelbar sind, und in der lichtleitenden Schicht (10) des Lichtwellenleiters (6) stromab der Meß- und Referenzstrecke (3,4) ein Paar planarer Spalte als optischer Teiler angeordnet ist, die durch eine nachgeordnete, photoelektrische Erfassungseinrichtung, insbesondere eine CCD-Zeile(5), erfaßbar sind.

17. Optische Detektoreinrichtung nach Anspruch 16, **dadurch gekennzeichnet, daß** stromauf der planaren Spalte planare Linsen (16) zur Fokussierung des geführten Lichtes in einer Dimension auf die planaren Spalte zur Intensitätssteigerung der Signalgewinnung angeordnet sind.

18. Optische Detektoreinrichtung nach Anspruch 17, **dadurch gekennzeichnet, daß** die planaren Linsen (16) durch Anhebung einer effektiven Brechzahl der Wellenleiterstruktur, insbesondere durch eine erhöhte Dicke der lichtleitenden Schicht (10) des Lichtwellenleiters (6), gebildet sind.

19. Optische Detektoreinrichtung nach Anspruch 17 oder 18, **dadurch gekennzeichnet, daß** die planaren Spalte durch metallische Beschichtung (17) des planaren Lichtwellenleiters (6) realisiert sind.

20. Optische Detektoreinrichtung nach Anspruch 17 oder 18, **dadurch gekennzeichnet, daß** die planaren Spalte durch definierte Unterbrechung der lichtleitenden Schicht des planeren Lichtwellenleiters, insbesondere durch strukturiertes Ätzen der Oberfläche des ganzflächig mit der lichtleitenden Schicht beschichteten Lichtwellenleiters, realisiert sind.

21. Optische Detektoreinrichtung nach zumindest einem der vorhergehenden Ansprüche 1 bis 14, **dadurch gekennzeichnet, daß** die Meß- und Referenzstrecke (3, 4) in einem integriert-optischen Teiler in Y-Form, der einen lateral strukturierten, planaren Lichtwellenleiter bildet, ausgebildet sind, und der optische Teiler in Y-Form das Licht auf zwei Ausgänge aufteilt, die die Strahlenquellen bilden.

22. Optische Detektoreinrichtung nach zumindest einem der vorhergehenden Ansprüche 1 bis 21, **dadurch gekennzeichnet, daß** ein planarer Lichtwellenleiter (6) eine Mehrzahl von Meß- und Referenzstrecken (3,4) aufweist und am Ende des Lichtwellenleiters (6) eine Mehrzahl von den Meß- und Referenzstrecken zugeordneten, divergente Lichtbündel abstrahlende Strahlquellen gebildet sind, denen eine Auswahleinrichtung (20) für Meß- und Referenzstrecken (3,4) zugeordnet und eine fotoelektrische Erfassungseinrichtung (5) nachgeordnet ist.

23. Optische Detektoreinrichtung nach Anspruch 22, **dadurch gekennzeichnet, daß** die Strahlquellen durch eine, vorzugsweise steuerbare, Schlitzblendenanordnung (19) gebildet sind.

24. Optische Detektoreinrichtung nach Anspruch 23, **dadurch gekennzeichnet, daß** den Meß- und Referenzstrecken (3, 4) des Lichtwellenleiters (6) stromab desselben eine das aus dem Lichtwellenleiter (6) austretende Licht auf die Schlitzblendenanordnung (19) fokussierende Linsenanordnung (18) zugeordnet ist.

25. Optische Detektoreinrichtung nach Anspruch 22, **dadurch gekennzeichnet, daß** die Auswahleinrichtung ein elektrooptisch schaltbares Flüssigkeitskristallfeld (20) zur Auswahl eines jeweils aus Meßstrecke (3) und zugehöriger Referenzstrecke (4) gebildeten Einwirkungskanalpaares ist.

26. Optische Detektoreinrichtung nach zumindest einem der vorhergehenden Ansprüche 22 bis 24, **dadurch gekennzeichnet, daß** stromauf und stromab des Lichtwellenleiters (6) eine Umlenkspiegelanordnung (15) vorgesehen ist.

27. Optische Detektoreinrichtung nach zumindest einem der vorhergehenden Ansprüche 22 bis 26, **dadurch gekennzeichnet, daß** die Mehrzahl von Meß- und Referenzstrecken (3, 4) des Lichtwellenleiters gemeinsam von der Lichtquelle nach Strahlaufweitung und gegebenenfalls Kollimation beaufschlagt sind.

## Claims

1. An optical detector device, in particular for analyzing substances, mixtures of substances or chemical reactions and for determining refractive indices, comprising a light source, at least one measurement path and at least one reference path, and at least one optoelectronic detection means, at least one optical divider arranged downstream of the light source for forming two radiation sources for forming a respective light beam, one light beam having assigned thereto a measurement path and one light beam having assigned thereto a reference path, and the measurement path being configured such that upon use of the detector device for the analysis of a medium the phase velocity of the light is influenced thereby in said measurement path, the measurement and reference paths (3; 4) being configured in a planar optical wave guide (6), **characterized in that** each light beam is divergent and the divergent light beams are superimposed in a detection area in which a local resolution detector is positioned, for detecting a characteristic linear intensity distribution.

2. The optical detector device according to claim 1, **characterized in that** the two radiation sources (9, 9') radiate coherent light or light of a small length of coherence.

3. The optical detector device according to at least one of the preceding claims 1 or 2, **characterized in that** in measurement and reference path light of different wavelengths is used at the same time and the intensity distribution can be described by a cos² function with periodic envelope or a non-periodic envelope superposed thereonto.

4. The optical detector device according to claim 3, **characterized in that** a detection and reference medium assigned to the measurement path and reference path, respectively, is positioned in a flow cell or cuvette (21), so that the phase velocity of the light is influenced by the detection and reference medium in the measurement path and reference path, respectively.

5. The optical detector device according to claim 4, **characterized in that** at least the detection medium (26) has fluorescent characteristics and the fluorescent radiation (22) radiated by the detection medium upon irradiation with the light beam guided in the measurement path is supplied to a receiving means (23).

6. The optical detector device according to claim 5, **characterized in that** the receiving means contains a photodetector (23), preferably with a filter (24) arranged upstream thereof.

7. The optical detector device according to claim 5 or 6 **characterized in that** the light beam assigned to the measurement path (3) is coupled into a planar optical waveguide (6) preferably provided in part with a cover layer (25), and in an exposed region of the light-conducting layer (10) of the optical waveguide (6), a cell or cuvette (21) with the detection medium (26) is in contact with said layer.

8. The optical detector device according to claim 7, **characterized in that** the fluorescent radiation (22) irradiated by the detection medium (26) can be detected, across a transparent substrate (11) of the optical waveguide (6), by the receiving means (23) which is arranged in the area of a back of the planar waveguide.

9. The optical detector device according to at least one of the preceding claims 1 to 8, **characterized in that** the optical divider is arranged upstream of the measurement and reference paths (3, 4).

10. The optical detector device according to at least one of the preceding claims 1 to 8, **characterized in that** the optical divider is arranged downstream of the measurement and reference paths (3, 4).

11. The optical detector device according to at least one of the preceding claims 1 to 10, **characterized in that** the optical divider and the measurement and reference paths (3, 4) are integrated into the planar optical waveguide (6).

12. The optical detector device according to at least one of the preceding claims 1 to 10, **characterized in that** the optical divider is an optical beam-forming means (2) with a focusing lens and a Köster's prism (8).

13. The optical detector device according to claim 12, **characterized in that** the Köster's prism (8) has arranged downstream thereof the planar optical waveguide (6) which divergently guides the two diverging light beams in the plane of the light-conducting layer (10) of the planar optical waveguide (6).

14. The optical detector device according to claim 13, **characterized in that** downstream of the optical waveguide (6) the light beams are collimated or focused with a cylindrical lens in a plane perpendicular to the optical waveguide (6) for producing a linear intensity distribution.

15. The optical detector device according to at least one of the preceding claims 1 to 14, **characterized in that** the optical waveguide (6) is laterally unstructurized and in said waveguide parallel light beams can be coupled in and/or out in measurement and reference path (3, 4), in particular via coupling gratings (12), and downstream of the optical waveguide a cylindrical lens assembly (13) is arranged followed by a pair of spherical lenses (7) in the focal plane of which a double pinhole diaphragm (14) is arranged as an optical divider and the divergent light beams extending therefrom are received by a photoelectric detection means, in particular a CCD line (5).

16. The optical detector device according to at least one of the preceding claims 1 to 14, **characterized in that** the optical waveguide (6) is laterally unstructurized and in said optical waveguide parallel light beams can be coupled in and/or out in measurement and reference path (3,4), in particular via coupling gratings (12), and in the light-conducting layer (10) of the optical waveguide (6), downstream of the measurement and reference path (3, 4), a pair of planar slits is arranged as optical dividers which can be detected by a subsequent photoelectric detection means, in particular a CCD cell (5).

17. The optical detector device according to claim 16, **characterized in that** upstream of the planar slits, planar lenses (16) are arranged for focusing the guided light in a direction onto the planar slits for increasing the intensity of the signal gain.

18. The optical detector device according to claim 17, **characterized in that** the planar lenses (16) are formed by increasing an effective refractive index of the optical waveguide structure, in particular by an increased thickness of the light-conducting layer (10) of the optical waveguide (6).

19. The optical detector device according to claim 17 or 18, **characterized in that** the planar slits are realized by a metallic coating (17) of the planar optical waveguide (6).

20. The optical detector device according to claim 17 or 18, **characterized in that** the planar slits are realized by a defined interruption of the light-conducting layer of the planar optical waveguide, in particular by structurized etching of the surface of the optical waveguide which is coated over the whole surface with the light-conducting layer.

21. The optical detector device according to at least one of the preceding claims 1 to 14, **characterized in that** the measurement and reference paths (3, 4) are formed in an integrated optical Y-divider which forms a laterally structurized, planar optical waveguide, and the optical Y-divider divides the light over two outputs which form the radiation sources.

22. The optical detector device according to at least one of the preceding claims 1 to 21, **characterized in that** a planar optical waveguide (6) comprises a plurality of measurement and reference paths (3, 4) and at the end of the optical waveguide (6) a plurality of radiation sources are formed which are assigned to the measurement and reference paths and radiate divergent light beams and which have assigned thereto a selection means (20) for measurement and reference paths (3, 4) and have arranged downstream thereof a photoelectric detection means (5).

23. The optical detector device according to claim 22, **characterized in that** the radiation sources are formed by a preferably controllable slit diaphragm assembly (19).

24. The optical detector device according to claim 23, **characterized in that** the measurement and reference paths (3, 4) of the optical waveguide (6) have assigned downstream of said waveguide a lens assembly (18) which is focusing the light exiting from the optical waveguide (6) onto the slit diaphragm assembly (19).

25. The optical detector device according to claim 22, **characterized in that** the selection means is an electro-optically switchable liquid crystal field (20) for selecting a pair of action channels each formed of a measurement path (3) and an associated reference path (4).

26. The optical detector device according to at least one of the preceding claims 22 to 24, **characterized in that** a deflection mirror assembly (15) is provided upstream and downstream of the optical waveguide (6).

27. The optical detector device according to at least one of the preceding claims 22 to 26, **characterized in that** the plurality of measurement and reference paths (3, 4) of the optical waveguide are jointly acted upon by the light source after beam expansion and optionally collimation.

## Revendications

1. Détecteur optique, en particulier pour l'analyse de substances, mélanges de substances ou réactions chimiques, et pour le calcul d'indices de réfraction, avec une source lumineuse, au moins une section de mesure et au moins une section de référence et au moins un dispositif de détection optoélectronique, avec au moins un diviseur optique disposé en aval de la source lumineuse pour la formation de deux sources de rayonnement pour la réalisation de respectivement un faisceau lumineux, une section de mesure étant attribuée à un faisceau lumineux et une section de référence étant attribuée à un faisceau lumineux et une vitesse de phases de la lumière pouvant être influencée par un agent à détecter au moins dans la section de mesure, la section de mesure et la section de référence (3 ; 4) étant réalisées dans un guide d'ondes de couche planaire ou un guide d'ondes optiques planaire, structuré latéralement en ce qui concerne sa couche de conduction de lumière, et les faisceaux lumineux étant superposés pour une répartition d'intensité, **caractérisé en ce que**, dans un plan de détection, dans lequel se trouve un détecteur à résolution locale, les faisceaux lumineux sont superposés pour la détection d'une répartition d'intensité caractéristique et de. forme linéaire et l'appareil est conçu de telle façon que chaque faisceau lumineux est émis de façon divergente sur le détecteur.

2. Détecteur optique selon la revendication 1, **caractérisé en ce que** les deux sources de rayonnement (9, 9') émettent de la lumière cohérente ou de la lumière de faible longueur de cohérence.

3. Détecteur optique selon au moins l'une quelconque des revendications précédentes 1 ou 2, **caractérisé en ce que**, dans la section de mesure et la section de référence, on utilise simultanément de la lumière de longueurs d'onde différentes et la répartition d'intensité peut être décrite par une fonction de cos² avec une enveloppante périodique ou une enveloppante non périodique et superposée à celle-ci.

4. Détecteur optique selon la revendication 3, **caractérisé en ce qu'**un agent de détection et de référence attribué à la section de mesure et de référence se trouve dans une cellule d'écoulement ou une cuvette (21), de sorte que, dans la section de mesure et de référence, la vitesse de phase de la lumière est influencée par l'agent de détection et de référence.

5. Détecteur optique selon la revendication 4, **caractérisé en ce qu'**au moins l'agent de détection (26) présente des propriétés de fluorescence et le rayonnement de fluorescence (22), qui est dégagé par l'agent de détection lors de l'exposition du faisceau lumineux guidé dans la section de mesure, est amené à un système de réception (23).

6. Détecteur optique selon la revendication 5, **caractérisé en ce que** le système de réception contient un photodétecteur (23), de préférence avec un filtre (24) placé en amont.

7. Détecteur optique selon la revendication 5 ou 6, **caractérisé en ce que** le faisceau lumineux attribué à la section de mesure (3) est injecté dans un guide d'ondes optiques (6) planaire, pourvu de préférence partiellement d'une couche de revêtement (25), et dans une zone dénudée de la couche (10) de guidage de lumière du guide d'ondes optiques (6), une cuvette (21) avec l'agent de détection (26) est en contact avec cette couche.

8. Détecteur optique selon la revendication 7, **caractérisé en ce que** le rayonnement de fluorescence (22) émis par l'agent de détection (26) peut être détecté à travers un substrat (11) transparent du guide d'ondes optiques (6) par le dispositif de réception (23) disposé dans la zone d'une face arrière du guide d'ondes planaire.

9. Détecteur optique selon au moins l'une quelconque des revendications 1 à 8, **caractérisé en ce que** le diviseur optique est disposé en amont de la section de mesure et de la section de référence (3, 4).

10. Détecteur optique selon au moins l'une quelconque des revendications 1 à 8, **caractérisé en ce que** le diviseur optique est disposé en aval de la section de mesure et de la section de référence (3, 4).

11. Détecteur optique selon au moins l'une quelconque des revendications 1 à 10, **caractérisé en ce que** le diviseur optique et la section de mesure et la section de référence (3, 4) sont intégrés dans le guide d'ondes optiques planaire (6).

12. Détecteur optique selon au moins l'une quelconque des revendications 1 à 10, **caractérisé en ce que** le diviseur optique est une optique de modelage de faisceau (2) avec une lentille de focalisation et un prisme de Kösters (8).

13. Détecteur optique selon la revendication 12, **caractérisé en ce que** le prisme de Kösters (8) est suivi du guide d'ondes optique planaire (6) qui guide de façon divergente les deux faisceaux lumineux divergents dans le plan de la couche de guidage de lumière (10) du guide d'ondes optiques (6) planaire.

14. Détecteur optique selon la revendication 13, **caractérisé en ce que**, en aval du guide d'ondes optiques (6), les faisceaux lumineux sont collimatés dans un plan perpendiculairement au guide d'ondes optiques (6) pour la production d'une répartition d'intensité de forme linéaire ou sont focalisés avec une lentille cylindrique.

15. Détecteur optique selon au moins l'une quelconque des revendications 1 à 14, **caractérisé en ce que** le guide d'ondes optiques (6) n'est pas structuré au plan latéral et que, dans celui-ci, dans la section de mesure et de référence (3, 4), des faisceaux lumineux parallèles peuvent être injectés ou dissociés, en particulier au moyen de grilles de couplage (12), et en aval du guide d'ondes optiques est disposé un agencement de lentilles cylindriques (13), suivi d'une paire de lentilles sphériques (7), dans le plan focal desquelles un double diaphragme à trou (14) est disposé comme diviseur optique et les faisceaux lumineux divergents partant de celui-ci sont réceptionnés par un dispositif de détection photoélectrique, en particulier une cellule CCD (5).

16. Détecteur optique selon au moins l'une quelconque des revendications 1 à 14, **caractérisé en ce que** le guide d'ondes optiques (6) n'est pas structuré au plan latéral et, dans celui-ci, dans la section de mesure et la section de référence (3, 4), des faisceaux lumineux parallèles peuvent être injectés ou dissociés, en particulier au moyen de grilles de couplage (12), et dans la couche de conduction de lumière (10) du guide d'ondes optiques (6), une paire de fentes planaires est disposée comme diviseur optique en aval de la section de mesure et de la section de référence (3, 4), lesquelles fentes peuvent être détectées par un dispositif de détection photoélectrique et placées en aval, en particulier une cellule CCD (5).

17. Détecteur optique selon la revendication 16, **caractérisé en ce que** des lentilles (16) planaires sont disposées en amont des fentes planaires pour la focalisation de la lumière guidée dans une dimension sur les fentes planaires pour augmenter l'intensité de l'obtention du signal.

18. Détecteur optique selon la revendication 17, **caractérisé en ce que** les lentilles (16) planaires sont formées par l'élévation d'un indice de réfraction effectif de la structure du guide d'ondes, en particulier par une épaisseur élevée de la couche de conduction de lumière (10) du guide d'ondes optiques (6).

19. Détecteur optique selon la revendication 17 ou 18, **caractérisé en ce que** les fentes planaires sont réalisées par une enduction (17) métallique du guide d'ondes optiques (6) planaire.

20. Détecteur optique selon la revendication 17 ou 18, **caractérisé en ce que** les fentes planaires sont réalisées par une interruption définie de la couche de conduction de lumière du guide d'ondes planaire, en particulier par un décapage structuré de la surface supérieure du guide d'ondes optiques revêtu sur toute la surface de la couche de conduction de lumière.

21. Détecteur optique selon au moins l'une quelconque des revendications 1 à 14, **caractérisé en ce que** la section de mesure et la section de référence (3, 4) sont réalisées dans un diviseur optique et intégré en forme de Y, qui forme un guide d'ondes optiques planaire et structuré au plan latéral, et le diviseur optique en forme de Y répartit la lumière entre deux sorties qui constituent les sources de rayonnement.

22. Détecteur optique selon au moins l'une quelconque des revendications 1 à 21, **caractérisé en ce qu'**un guide d'ondes planaire (6) présente une pluralité de sections de mesure et de référence (3, 4) et une pluralité de sources de rayonnement attribuées aux sections de mesure et de référence et diffusant des faisceaux lumineux divergents est formée sur l'extrémité du guide d'ondes optiques (6), sources auxquelles est attribué un appareil de sélection (20) pour les sections de mesure et de référence (3, 4) et quí sont suivies d'un appareil de détection (5) photoélectrique.

23. Détecteur optique selon la revendication 22, **caractérisé en ce que** les sources de rayonnement sont formées par un agencement de fentes de diaphragme, de préférence contrôlable.

24. Détecteur optique selon la revendication 23, **caractérisé en ce qu'**un dispositif de lentilles (18) focalisant la lumière sortant du guide d'ondes optiques (6) sur le dispositif à fentes de diaphragme (19) est attribué aux sections de mesure et de référence (3, 4) du guide d'ondes optiques (6) en aval de celui-ci.

25. Détecteur optique selon la revendication 22, **caractérisé en ce que** l'appareil de sélection est un panneau à cristaux liquides (20) commutable de façon électro-optique pour la sélection d'une paire de canaux d'influence formée respectivement de la section de mesure (3) et de la section de référence (4) respective.

26. Détecteur optique selon au moins l'une quelconque des revendications précédentes 22 à 24, **caractérisé en ce qu'**un dispositif de miroir de déviation (15) est prévu en amont et en aval du guide d'ondes optiques (6).

27. Détecteur optique selon au moins l'une quelconque des revendications précédentes 22 à 26, **caractérisé en ce que** la pluralité des sections de mesure et de référence (3, 4) du guide d'ondes optiques est sollicitée conjointement par la source de lumière après l'élargissement du faisceau lumineux et éventuellement la collimation.
